Europäisches Patentamt

European Patent Office

Office européen des brevets

(11) Publication number: **0 090 697**
**A2**

## (12) EUROPEAN PATENT APPLICATION

(21) Application number: 83400511.8

(22) Date of filing: 11.03.83

(51) Int. Cl.³: **B 62 D 5/06**

(30) Priority: 30.03.82 JP 51874/82

(71) Applicant: **NISSAN MOTOR COMPANY, LIMITED, No.2, Takara-cho, Kanagawa-ku, Yokohama City (JP)**

(72) Inventor: **Yamaguchi, Hirotsugu, No 6-45, Hamasuka, Chigasaki City (JP)**
Inventor: **Sasaki, Shuichi, No 3-4688-1, Sobudai, Zama City (JP)**
Inventor: **Yanai, Tokiyoshi, No 4-23-15, Oyabe, Yokosuka City (JP)**
Inventor: **Fukino, Masato, No 3-5-1-406, Kami-ohokanishi, Konan-ku Yokohama City (JP)**
Inventor: **Aoyama, Yutaka, No 3-68, Oppama-higashicho, Yokosuka City (JP)**

(43) Date of publication of application: 05.10.83
Bulletin 83/40

(74) Representative: **Portal, Gérard et al, Cabinet Z. Weinstein 20, Avenue de Friedland, F-75008 Paris (FR)**

(84) Designated Contracting States: **DE FR GB**

(54) Rack and pinion steering arrangement including an improved neutral position sensor.

(57) The invention relates to a rack and pinion steering arrangement including an improved neutral position sensor.

The neutral steering position of a rack shaft (14) of a rack and pinion steering arrangement (10) is sensed by a switch (52) having a probe (42) which extends into a recess (46) formed in the rack shaft (14), when the shaft is in its home or neutral position and which is depressed downwardly upon the rack shaft (14) being moved to the left or right of the neutral position. The switch (52) may be of the contact type or of a magnetic flux sensitive type responsive to the depression of the probe (42).

This sensor arrangement is more sensitive and is securely disposed in a location where it is protected from vibrations and the like.

ACTORUM AG

## A RACK AND PINION STEERING ARRANGEMENT INCLUDING AN IMPROVED NEUTRAL POSITION SENSOR

The present invention relates generally to a rack and pinion steering arrangement and more specifically to such a steering arrangement wherein a sensor is provided therein for sensing a neutral steering position thereof.

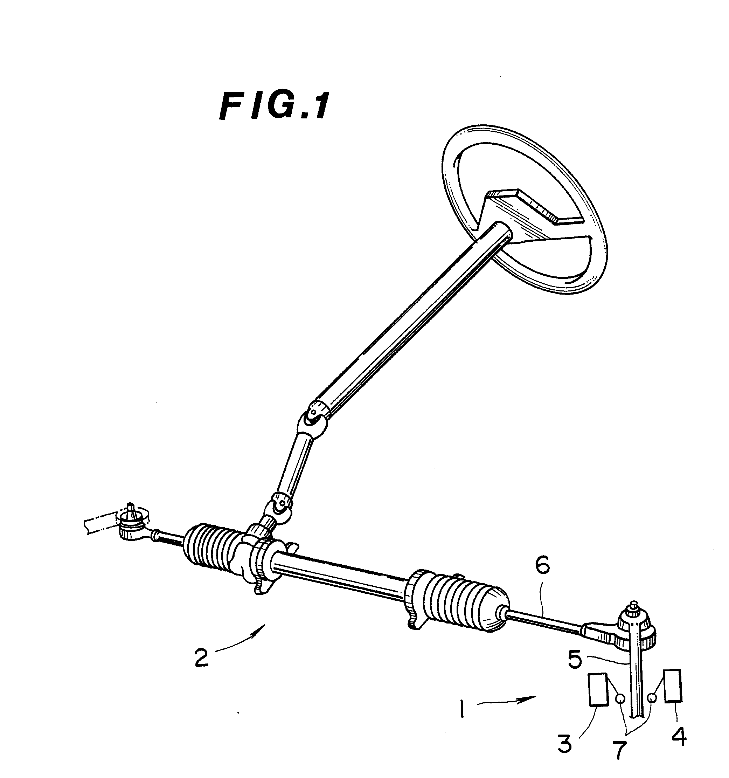

In a previously proposed arrangement shown in Figure 1 of the drawings, in order to facilitate the appropriate energization/de-energization of a power steering pump and/or other ancillary apparatus (not shown), a sensor 1 for sensing the neutral steering position of the steering arrangement 2 has been provided. This sensor takes the form of a pair of switches 3,4, located on either side of a knuckle arm 5 operatively interconnecting the steering rod 6 and a road wheel (not shown). As shown, each of the switches 3,4 is arranged to have a probe member 7 which is contacted by the knuckle arm 5 upon same being moved a predetermined amount from a position wherein the neutral steering condition is maintained.

However, this arrangement has suffered from the drawback that the sensor 1 has lacked a desirable level of sensitivity due to the somewhat excessive gaps which must be provided between the knuckle arm 5 and each of the probes 7 to allow for play in the joints at each end of the knuckle arm, vibration etc. Moreover, the switches comprising the sensor are themselves exposed, due to their physical location, to vibration, soiling etc., which tends to rapidly shorten the effective life thereof.

2

It is an object of the present invention to provide a neutral steering position sensor for a rack and pinion shaft type steering arrangement which is both sensitive to the steering of the road wheels from their neutral position and which is securely disposed in a location wherein it is protected from vibration and the like.

In general terms the present invention features an arrangement wherein the position of a rack shaft of a rack and pinion steering arrangement is sensed by a switch having a probe which extends into a recess formed in the shaft, when the shaft is in its home or neutral position, and which is depressed downwardly upon the shaft being moved to the left or right of the neutral position. The switch may be of the contact type or of a magnetic fluw sensitive type responsive to the depression of the probe.

More specifically, the present invention takes the form of a rack and pinion steering arrangement having a rack shaft slidably received in a rack tube and operatively connected with a pinion housed in a gear housing and a sensor for sensing the neutral position of said rack shaft which comprises: means defining a recess in said rack shaft, and a switch having a probe which, in a first position thereof, extends into said recess when said rack shaft is in the neutral position thereof and which, in a second position thereof, is depressed away from said first position by contact with a non-recessed portion of the rack shaft upon said rack shaft being moved axially from said neutral position by a predetermined amount, said switch being arranged to produce an output signal upon said probe being moved from said first position to said second position.

The features and advantages of the arrangement of the present invention will become more clearly appreciated from the following description taken in conjunction with the accompanying drawings in which :

Figure 1 is a perspective view of the prior art rack and pinion steering arrangement discussed in the opening paragraphs of the present application;

Figure 2 is a partially sectioned view of rack and pinion steering arrangement in which a sensor characterizing the present invention is disposed in the gear housing thereof;

Figure 3 is a sectional view as taken along section line III-III of Figure 2, showing a first embodiment of the present invention;

Figure 4 is a front elevation view which shows the major elements of the first embodiment;

Figure 5 is a graph showing the output of the sensor characterizing the present invention in terms of voltage and distance;

Figure 6 is a sectional view similar to that of Figure 3 but which shows a second embodiment of the present invention; and

Figure 7 is a partially sectioned elevation view of a probe which may be used in either of the first and second embodiment and which is provided with a ball bearing at the upper end thereof.

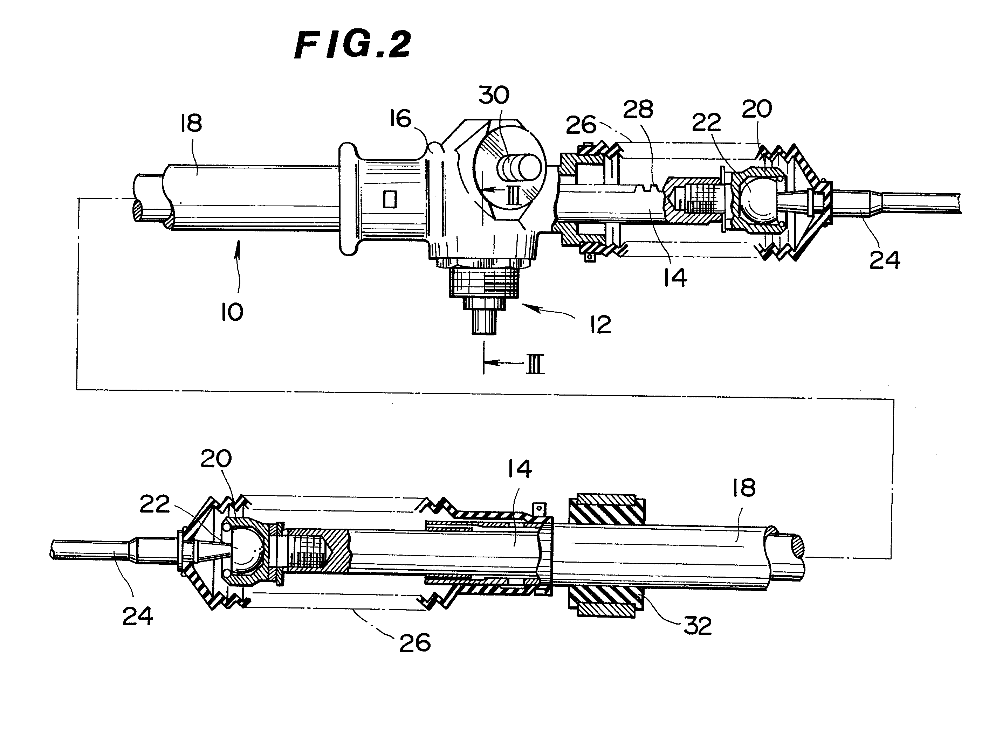

Figure 2 shows a partially sectioned view of a rack

4

and steering arrangement 10 in which a neutral steering position sensor 12 according to the present invention, is provided. In this arrangement a rack shaft 14 is reciprocatively disposed in a gear housing 16 and rack tube 18 arrangement. Ball Socket members 20 are threadedly received in either end of the rack shaft 14, as shown, and arranged to operatively receive therein ball stud members 22 formed or fixedly attached to the ends of steering rods 24. As shown, corrugated elastomeric boots 26 are provided to cover the exposed ends of the rack shaft 14 and enclose the ball joints defined by the just mentioned ball socket and ball stud arrangements. Arranged within the gear housing 16 is a pinion (not shown) which operatively meshes with the rack 28 formed along one side of the rack shaft 14. The pinion is rotatably driven by a shaft 30 which is connectable with a steering column arrangement not shown.

Suitable elastomeric bushes 32 (only one shown) are arranged to support the rack tube 18 in position on a vehicle chassis (also not shown).

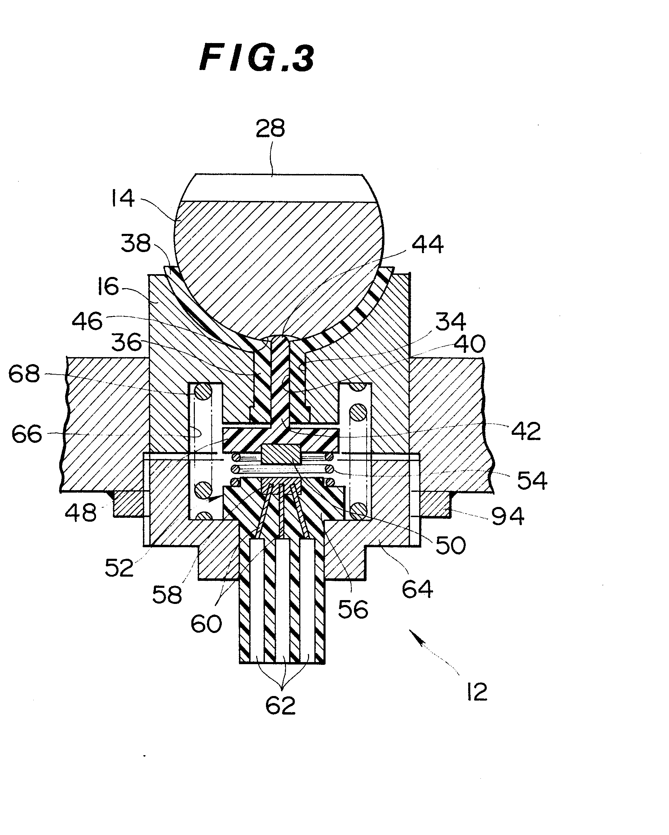

Figure 3, is cross sectional view taken along section line III-III and shows in detail a first embodiment of a neutral steering position sensor 12 according to the present invention. In this first embodiment the gear housing 16 is formed with a stepped bore 34 which receives therein, a stem-like extension 36 formed integrally with a resilient elastomeric bush 38 in which the rack shaft 14 is slidably received. This bush (38) serves as a reaction member for biasing the rack shaft 14 into firm and constant contact with the pinion.

Slidably disposed in an elongate bore 40 formed in the stem-like extension 36 is a piston-like probe member 42. This member is also formed of an elastomeric resin but which in this case is of a relatively hard type. The probe member 42 is formed with a rounded tip 44 at one end thereof, which seats in a recess 46 in the rack shaft 14 in a position diametrically opposed the rack 28 when said shaft assumes a neutral steering position (viz., one in which the steerable wheels of the vehicle are oriented in a manner to maintain the vehicle running in a straight line).

A land 48 is formed at the other end of the probe member 42 and arranged to carry a magnet 50 thereon. This magnet as shown, is arranged juxtapose a Hall-effect switch which is generally denoted by the numeral 52.

A spring 54 is arranged between the land 48 and a synthetic resin member 56 in which the Hall-effect element 58, lead wires 60 and terminals 62 are enclosed. As shown, the synthetic resin member 56 is disposed in a cup-like member 64 threadly connected to the gear housing. Interposed between the cup-like member 64 and an annular bore 66 formed in the gear housing 16 is a spring 68 which biases the gear housing and cup-like member apart. With this construction, the cup-like member 64 may be rotated so as to adjust the position of the Hall-effect switch 52 with respect to the magnet 50, when the magnet is in the position shown and/or in the depressed state whichever is deemed the most appropriate, so that upon sufficient movement of the rack shaft 14 to the left or right of the illustrated position, to depress the probe downwardly against the bias of the spring, the magnet 50 is brought into sufficiently close proximity of the Hall-effect switch 52 as to induce the latter to output a signal.

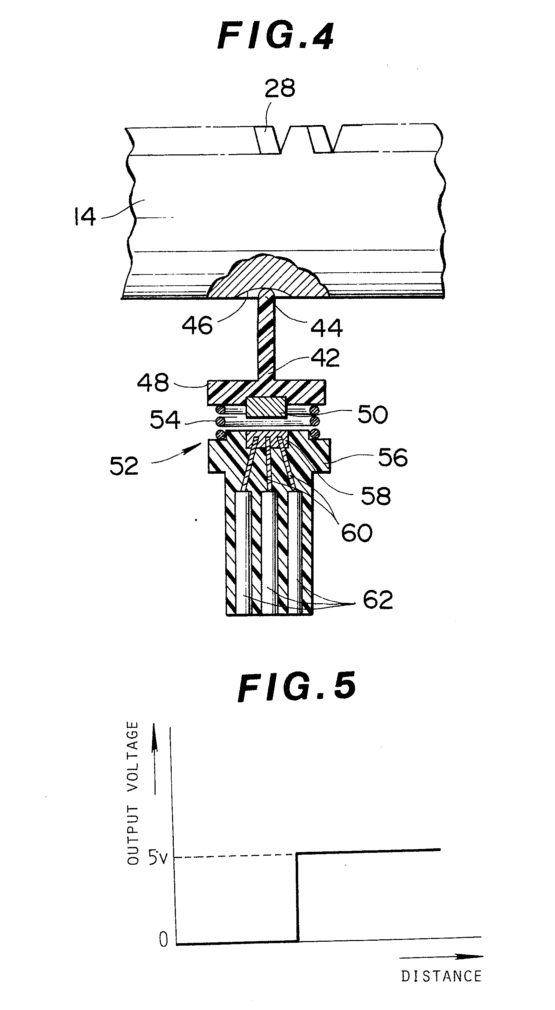

Figure 4 shows the essential elements of the first embodiment showing the rack shaft 14 located in a neutral steering position and the tip 44 of the probe 42 received in the recess 46 which as shown, has a smoothly curved configuration to facilitate the smooth depression of the probe 42 upon axial movement of the rack shaft 14.

Figure 5 shows the output of the first embodiment in terms of output voltage and distance. As shown, upon the rack shaft 14 being moved axially by a predetermined distance and the magnet 50 being moved into close proximity of the Hall-effect switch 52, the latter outputs a 5 volt signal (by way of example).

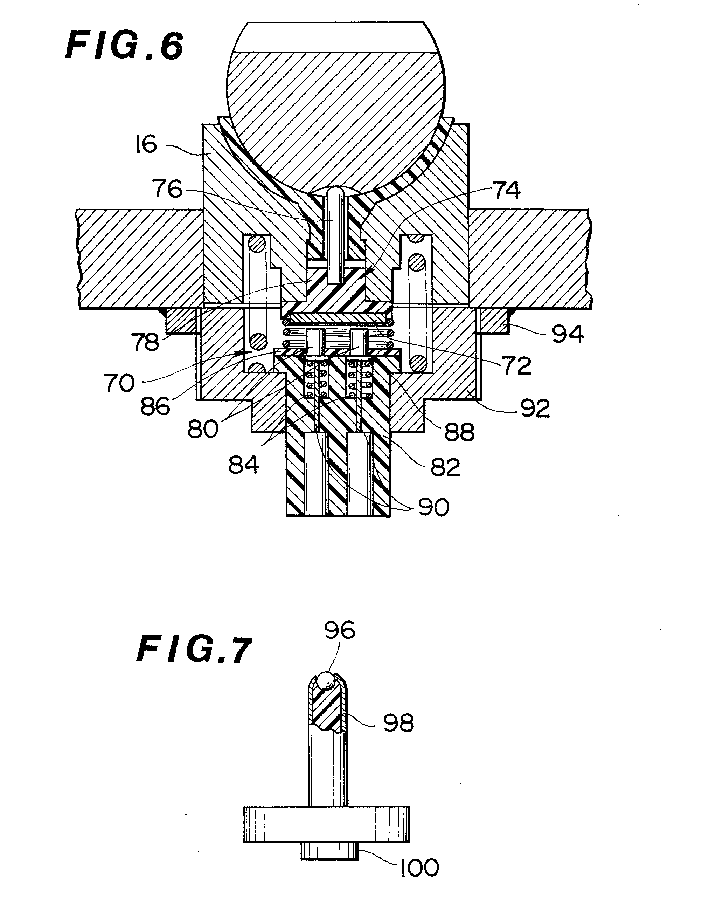

Figure 6 shows a second embodiment of the present invention. In this arrangement the Hall-effect switch 52 is replaced with a more conventional contact type 70. Thus, in place of the magnet 50 a conductive plate 72 is fixedly attached to the lower surface of a probe member 74. As shown, in this embodiment the probe 74 comprises a metallic pin 76 which is studded into an elastomeric base member 78 on which the conductive plate (viz., movable 72 contact) is fixed. It should be noted at this time that the probe 42 of the first embodiment is formed entirely of elastomeric resin to attenuate any possible effect of noise which may be transmitted from the rack shaft 14 and which might interfere with the operation of the magnetic flux density responsive switch employed therein.

A pair of stationary contacts 80 are mounted in an elastomeric case member 82 and spring loaded via springs 84 so as to be biased to project out of a retaining member 86 fixed to the top of the elastomeric case member 82. Electrically connected to the lower surface of limiting flanges 88 formed at the lower ends of the stationary contacts 80 are lead wires 90. This arrangement of course buffers the switch against damage by repeated contact between the movable and stationary contacts 72, 80.

As shown, the elastomeric case member 82 is retained in a cap member 92 which, as in the first embodiment, is threadedly received in a nut or similar member 94 welded to the gear housing 16. Of course if desired the housing per se may be formed with a threaded bore in place of the nut.

Figure 7 shows an alternative probe design which although shown provided with a magnet 100, may be used in either embodiment given slight design changes. This probe is characterized by the provision of a roller bearing type arrangement wherein a ball 96 is rotatably retained at the tip thereof by a sleeve member 98 press fitted onto a reduced diameter portion of the probe. This arrangement reduces the amount of friction produced between the probe and the rack shaft when the shaft is moved from its home or neutral position.

8

Claims

1.  A rack and pinion steering arrangement (10) having a rack shaft (14) slidably received in a rack tube (18) and operatively connected with a pinion housed in a gear housing (16), a sensor (12) for sensing the neutral position of said rack shaft (14) characterized in that it comprises : means defining a recess (46) in said rack shaft (14); and a switch (52) having a probe (42) which, in a first position thereof, extends into said recess (46) when said rack shaft (14) is in the neutral position thereof and which, in a second position thereof, is depressed away from said first position by contact with a non-recessed portion of said rack shaft upon said rack shaft being moved axially from said neutral position by a predetermined amount, said switch (52) being arranged to produce an output signal upon said probe being moved from said first position to said second position.

2.  A sensor arrangement as claimed in claim 1, characterized in that said switch (52) takes the form of a Hall-effect switch and wherein said probe (42) has a magnet (50) attached to an end (48) thereof juxtaposed said Hall-effect switch (52).

3.  A sensor arrangement as claimed in claim 1, characterized in that said rack shaft (14) is arranged to slide in a bushing (38) which bushing is formed with a bore (40) in which said probe (42) is slidably received.

4.  A sensor arrangement as claimed in claim 3, wherein said bushing (38) and said probe (42) are made of a synthetic resin.

5. A sensor arrangement as claimed in claim 1, wherein said switch takes the form of a pair of stationary contacts (80) and a movable contact (72) for electrically connecting said stationary contacts (80), said movable contact (72) being carried on an end of said probe (74) and arranged to contact said stationary contacts upon said probe (74) assuming said second position thereof.

6. A sensor arrangement as claimed in claim 1 wherein said probe has a ball (96) rotatably retained at an end thereof and which is arranged to act as a ball bearing between said probe and said rack shaft.

7. A sensor arrangement as claimed in claim 1 wherein said probe is biased away from said switch by a spring.

8. A sensor arrangement as claimed in claim 5 wherein said stationary contacts (80) are spring loaded (via springs 84) for cushioning the impact of the movable contact (72) thereon.

FIG.1

0090697

1/5

FIG.2

# FIG.3

# FIG.4

# FIG.5

FIG.6

FIG.7